# EUROPÄISCHE PATENTSCHRIFT

(11) **EP 3 877 089 B1**
(45) Veröffentlichungstag und Bekanntmachung des Hinweises auf die Patenterteilung: **26.10.2022**
(21) Anmeldenummer: 18803579.4
(22) Anmeldetag: 06.11.2018
(51) Int. Cl.: B04B 11/02, B04B 11/04, B04B 3/00, B04B 13/00, G01N 21/84

(54) **VERFAHREN ZUM BETREIBEN EINER ZENTRIFUGENVORRICHTUNG**
METHOD FOR OPERATING A CENTRIFUGE DEVICE
PROCÉDÉ DE FONCTIONNEMENT D'UN DISPOSITIF DE CENTRIFUGATION

(43) Veröffentlichungstag der Anmeldung: 15.09.2021
(73) Patentinhaber: Ferrum Process Systems AG, 5503 Schafisheim (CH)
(72) Erfinder: MÜHLEBACH, Marcel, 5102 Rupperswil (CH)
(74) Vertreter: IPS Irsch AG
(86) Internationale Anmeldenummer: PCT/EP2018/080338
(87) Internationale Veröffentlichungsnummer: WO 2020/094217

(56) Entgegenhaltungen:
- EP-A1- 2 275 207
- WO-A1-2017/054934
- DE-A1- 3 515 915

## Beschreibung

Die Erfindung betrifft ein Verfahren zum Betreiben einer Zentrifugenvorrichtung, sowie ein Zentrifugenvorrichtung und eine integrierbare Vorrichtung zur Verwendung in einem erfindungsgemässen Verfahren gemäss dem Oberbegriff der unabhängigen Ansprüche 1, 15 und 16.

Sowohl zur Trocknung feuchter Substanzen oder feuchter Substanzgemische, als auch zur generellen Fest- / Flüssigtrennung (d.h. das Produkt ist die Flüssigkeit) sind Zentrifugen in den verschiedensten Ausführungsformen weit verbreitet und werden auf den verschiedensten Gebieten eingesetzt. So kommen beispielsweise zur Trocknung hochreiner pharmazeutischer Produkte diskontinuierlich arbeitende Zentrifugen, wie Schälzentrifugen, bevorzugt zum Einsatz, während insbesondere dann, wenn kontinuierlich grosse Mengen eines fest-flüssig Gemischs getrennt werden sollen, kontinuierlich arbeitende Schubzentrifugen vorteilhaft eingesetzt werden. Dabei kommen je nach Anforderung ein- oder mehrstufige Schubzentrifugen, sowie sogenannte Doppelschubzentrifugen zum Einsatz.

Bei den verschiedenen Typen der zuletzt genannten Klasse von Schubzentrifugen wird ein fest-flüssig Gemisch, beispielsweise eine Suspension oder ein feuchtes Salz oder Salzgemisch, durch ein Einlaufrohr über einen Gemischverteiler einer schnell rotierenden Siebtrommel zugeführt, die ein Filtersieb umfasst, so dass auf Grund der wirkenden Fliehkräfte die flüssige Phase durch das Filtersieb ausgeschieden wird, während im Inneren an der Trommelwand ein Feststoffkuchen abgeschieden wird. Dabei ist in der rotierenden Trommel eine im Wesentlichen scheibenförmige, synchron mitrotierende Schubbodeneinrichtung angeordnet, die in der Siebtrommel mit einer gewissen Amplitude in axialer Richtung oszilliert, so dass ein Teil des getrockneten Feststoffkuchens an einem Ende der Siebtrommel herausgeschoben wird. Bei der entgegengesetzten Bewegung der Schubbodeneinrichtung wird ein an die Schubbodeneinrichtung angrenzender Bereich der Trommel freigegeben, der dann wieder mit neuem Gemisch beschickt werden kann.

Um die Menge des zugeführten Gemisches zu überwachen, besitzen die meisten Schälzentrifugen sogenannte Füllstands-Messgeräte.

Im Stand der Technik sind verschiedene Verfahren und Vorrichtungen zum Überwachen des Füllstandes und des Zentrifugen-Innenraums bekannt. Ein derartiges Verfahren und eine derartige Vorrichtung sind aus der DE 37 26 227 C2 bekannt. Dort ragt ein Fühlerarm in das Innere der Zentrifugentrommel und gleitet mit seiner Spitze auf der Oberfläche des in der Zentrifugentrommel vorhandenen Gemisches. Der Fühlerarm ist über eine Achse seitlich aus der Zentrifugentrommel heraus angeordnet und mit einem Drehwinkelgeber verbunden. Der Füllungsgrad des Gemisches in der Zentrifugentrommel kann so durch die Erfassung des Drehwinkels bestimmt werden. Außerdem kann über einen an der Fühlerspitze vorgesehen Thermofühler die Temperatur der zu ertastenden Oberfläche ermittelt werden.

Nachteilig ist bei diesem Verfahren und bei dieser Vorrichtung, dass Fühlerelemente in den Verfahrensraum der Zentrifuge hineinragen müssen. Auch kann beim Ertasten einer flüssigen Oberfläche keine Aussage über die Menge des Feststoffes unterhalb der Flüssigkeit getroffen werden. Das hieraus bekannte Verfahren ist lediglich bei Filterzentrifugen und einigen Ausführungen von diskontinuierlichen Sedimentationszentrifugen anwendbar. Ein ähnliches Verfahren und eine ähnliche Vorrichtung sind auch aus der Literaturstelle "Der Thermofüllkontrollregler", in: Chemie.-Ing.-Technik 62 (1990) Seite 304 bis 306, bekannt.

Weiterhin sind Füllkontrollregler bekannt, die in diskontinuierlich arbeitenden Filterzentrifugen eingesetzt werden und aus einer Kufe bestehen, welche in die Trommel einschwenkt. Durch die Berührung der mit Trommeldrehzahl rotierenden Flüssigkeit wird die Bewegung der Kufe in die Trommel durch den rotierenden Flüssigkeitsring gestoppt, und durch Anordnung von geeigneten Sensoren an dem sich bewegenden Teil der Kufenlagerung oder des Kufenantriebs kann eine Aussage über den Füllstand in der Zentrifuge getroffen werden.

Auch kann ein Füllstandsmesser mit einer Art Paddel ausgerüstet sein, welcher in einem fixen Winkel in die Zentrifuge eingeschwenkt. Sobald besagter Paddel mit dem Kuchen oder dem Flüssigkeitsüberstand in Berührung kommt, wird ein Rückschwenkmechanismus ausgelöst und das Paddel schwenkt wieder in seine Ruheposition. Nachteilig bei derartigen mechanischen Füllstandsmessungen sind der Verschleiss, Ablagerungen am Paddel, Spritzer durch Berührung des Paddels mit dem Kuchen/der Suspension und oft führen z.B. Luftströme an der Kuchenoberflächen dazu, dass das Paddel zu früh auslöst.

Es sind auch Verfahren und Vorrichtungen zur radiometrischen Füllstandsüberwachung von Zentrifugen bekannt. Dabei wird die Adsorption von radioaktiver Strahlung gemessen. Die Adsorption der radioaktiven Strahlung ist abhängig von der sich im Strahlenfeld befindenden Masse, so dass über die Dichten der Medien auf eine Füllhöhe zurückgerechnet werden kann. Da sich im Verlauf des Filtrationsprozesses der Anteil von Feststoff zu Flüssigkeit ständig ändert, kann keine absolute Aussage darüber getroffen werden, wie das Verhältnis der beiden Medien zueinander ist, oder wie der Gesamtfüllstand bei Gemischen aus Phasen unterschiedlicher Dichte in der Zentrifuge ist.

Zwar können Vorrichtungen zur radiometrischen Füllstandsüberwachung außerhalb des Verfahrensraumes der Zentrifuge angeordnet werden, jedoch ist der Aufwand zum Einsatz von radiometrischen Vorrichtungen aufgrund von Sicherheitsbestimmungen sehr hoch.

Es sind auch Vorrichtungen zur Ultraschall-Füllstandsmessung bekannt, wobei ein innerhalb der Zentrifuge angeordneter Ultraschallsensor einen Messstrahl auf die Oberfläche des Gemisches richtet und den Abstand dazu misst, woraus sich der Füllstand ermitteln lässt.

Nachteilig ist dabei, dass auch der Ultraschallsensor innerhalb der Zentrifugentrommel angeordnet werden muss und innerhalb dort Korrosion ausgesetzt ist und einer aufwendigen Wartung bedarf. Bei einer explosionssicheren Ausgestaltung eines derartigen Ultraschallsensors ist zudem dessen großes Einbauvolumen nachteilig. Außerdem kann der Messstrahl des auf eine begrenzte Energiedichte angewiesenen und daher in einem tiefen Frequenzbereich arbeitenden Ultraschallsensors bei hoher Relativgeschwindigkeit zwischen Messkopf und zu messendem Medium abgelenkt werden, wodurch die Betriebssicherheit herabgesetzt wird.

Ultraschallsensoren können auch ausserhalb der Zentrifuge angeordnet werden, wobei der Schallstrahl mittels Umlenkung in die Zentrifuge gelenkt wird. Jedoch ist Messgenauigkeit bei Ultraschallsensoren stark abhängig von Dichte und Temperatur des Produkts und sie haben einen relativ grossen Abstrahlwinkel.

Eine weitere Möglichkeit, den Füllstand einer Zentrifuge zu messen, ist die Kopplung der Zentrifuge mit einer Wägezelle oder einer Kraftmessdose. Dadurch lässt sich eine Aussage darüber treffen, wieviel Produkt sich innerhalb der Zentrifugentrommel befindet. Vorteilhaft ist dabei, dass sich die Wägezelle außerhalb des Verfahrensraumes befindet. Eine derartige Füllstandsmessung ist jedoch grundsätzlich problematisch, da das Verhältnis zwischen maximalem Füllgewicht der Zentrifuge und dem Eigengewicht der Zentrifuge etwa 1 : 50 bis 1 : 100 beträgt. Außerdem kann auf diese Weise nicht zwischen einer Füllung aus Feststoff oder Flüssigkeit unterschieden werden, so dass nicht feststellbar ist, ob das gemessene Füllungsgewicht dem Filterkuchen oder dem zu filtrierenden Medium zuzuordnen ist. Nachteilig ist weiterhin, dass bei ungleichmäßiger Beladung der Zentrifuge und damit verbundenem unwuchtigen Lauf die Gewichtserfassung über eine Wägezelle durch die Unwucht-bedingte Schwingungsüberlagerung wesentlich erschwert wird.

Aus der DE 40 41 923 A1 ist ein Verfahren zur Erfassung des Differenzmomentes zwischen Trommel und Schnecke in einem Dekanter bekannt. Bei diesem Verfahren wird über die Messung des Drehmomentes der Füllgrad im Austragbereich des Dekanters erfasst. Eine Aussage über den Feststoffgehalt innerhalb des Sedimentationsteils des Dekanters kann jedoch nicht getroffen werden. Auch kann das Verfahren nur eingesetzt werden zur Regelung von Dekantern im oberen Grenzbereich, d.h. bei nahezu 100 % Füllung des Austragsbereiches der Schnecke mit Produkt, wie das beispielsweise bei der Klärschlammabtrennung üblich ist. Eine Steuerung oder Regelung von Dekantern, die weit unterhalb des oberen Grenzbereichs arbeiten, kann mit diesem Verfahren nicht erfolgen.

Bei kontinuierlich arbeitenden Zentrifugen (wie z.B. Dekanterzentrifugen) ist es wichtig, den Anteil des innerhalb der Zentrifuge befindlichen Feststoffes genau zu kennen, um eine optimale Leistung und einen optimalen Trenngrad erreichen zu können. Dazu ist es erforderlich, den Füllstand des Feststoffes im Austragsbereich und das Verhältnis von Feststoff zu Flüssigkeit in der gesamten Zentrifuge zu kennen.

Bei diskontinuierlich arbeitenden Zentrifugen erfolgen die Schritte des Füllens mit dem Fest-Flüssig-Gemisch, des Waschens (Verdrängen von unerwünschter Primärflüssigkeit) und des Trockenschleuderns des Filterkuchens nacheinander. Um den Trennvorgang bei unterschiedlichen Füllbedingungen optimal ablaufen lassen zu können, muss sowohl der Füllstand von Feststoff als auch der Füllstand von Flüssigkeit erfasst werden. Außerdem ist es wichtig, den Zeitpunkt des Eindringens der Suspensionsflüssigkeit in den Filterkuchen zu erfassen. In Abhängigkeit von den Füllständen und dem Flüssigkeitseintauchpunkt kann die Schrittfolge und die Dauer der Schritte an die jeweiligen Erfordernisse des zu filtrierenden Produktes angepasst werden. Dabei wird angestrebt, den abgetrennten Feststoff erst dann aus der Zentrifuge auszutragen, wenn die erforderliche Produktqualität (Restfeuchte) erreicht ist. Andererseits soll aber der Zeitpunkt des Erreichens dieser Produktqualität nicht überschritten werden, da hierdurch wertvolle Produktionszeit und damit Produktionskapazität verloren geht. Insbesondere kann es bei einem Flüssigkeitsüberstand in der Zentrifuge zu einer Wellenbildung kommen, welche zu einer Unwucht und folglich zu Schäden führen kann.

Aus der EP 0 724 912 A1 ist des Weiteren ein Verfahren bekannt bei welchem Schwingungsfrequenzen und -intensitäten der Zentrifuge mittels wenigstens eines Schwingungsaufnehmers an der Zentrifuge als elektrische Signale erfasst werden, dass die Signale einer Frequenzspektrums-Analyse unterzogen werden, dass dabei aus dem erfassten Frequenzspektrum einzelne harmonische Schwingungen isoliert und anschließend die einer jeweiligen harmonischen Schwingung eigenen Intensitäten (Amplituden) für ein Zeitintervall bestimmt werden. Durch dieses Verfahren können bereits mit einem einzigen Schwingungsaufnehmer, der außerhalb des Verfahrensraumes an der Zentrifuge angeordnet sein kann, Messgrößen für eine Vielzahl von Betriebsparametern erfasst werden. Auf der Grundlage dieser Messgrößen können beispielsweise Aussagen über den Füllstand, über das Verhältnis von Flüssigkeit zu Feststoff getroffen werden. Da hierbei jedoch kein Parameter der Oberfläche des Feststoffkuchens in der Zentrifuge erfasst wird, kann auch keine Aussage über die Reinheit des Produktes getroffen werden.

Die WO 2017/054934 umfasst eine Vorrichtung zur Analyse und Überwachung des Inhalts einer Zentrifuge. Es wird hierbei mittels einer Breitbandlichtquelle mindestens ein Teil des Zentrifugeninnenraums beleuchtet und mittels eines optischen Bandpassfilters und eines Lichtdetektoren eine Spektralanalyse des von dem Füllmaterial reflektierten Lichtes durchgeführt. Durch die Lichtdetektoren werden Signale erzeugt, welche dann verarbeitet werden. Als Reaktion auf die so verarbeiteten Signale von der Lichtdetektoranordnung wird ein Steuersignal ausgegeben, um die Zentrifugalkraft zu steuern und dadurch die Trennung von festen und flüssigen Phasen zu steuern.

Derartige optische Sensoren, insbesondere im Bereich des sichtbaren Lichtes, weisen jedoch den enormen Nachteil auf, dass es unter anderem zum Signalverlust und Fehlsignalen kommen kann. Durch derartige Signalstörungen der Sensoren kann es zu Übersteuerung und zur Untersteuerung der Zentrifuge kommen. Somit sind kein regelmässiger Betrieb und keine sinngemässe Kontrolle der Zentrifuge möglich. Derartige Signalstörungen können unter anderem durch ungleichmässige Verteilung der Kuchenoberfläche, Verschmutzungen, Spritzer, Partikel in der Atmosphäre, Schaum und vielen weiteren Faktoren auftreten.

Ein weiteres Beispiel ist in der Druckschrift DE3515915 offenbart.

Die Aufgabe der Erfindung ist es somit ein verbessertes Verfahren zum Betreiben einer Zentrifugenvorrichtung bereitzustellen, mit welcher die eingangsbeschriebenen Probleme des Standes der Technik signifikant reduziert bzw. mehr oder weniger vollständig vermieden werden können.

Die diese Aufgaben lösenden Gegenstände der Erfindung sind durch die Merkmale der unabhängigen Ansprüche 1, 15 und 16 gekennzeichnet.

Die jeweiligen abhängigen Ansprüche beziehen sich auf besonders vorteilhafte Ausführungsformen der Erfindung.

Die Erfindung betrifft ein Verfahren zum Betreiben einer Zentrifugenvorrichtung. Hierbei umfasst die Zentrifugenvorrichtung unter anderem eine Zentrifuge, in welcher eine Zentrifugentrommel rotierbar um eine Rotationsachse angeordnet ist. Des Weiteren umfasst die Zentrifugenvorrichtung einen Lichtdetektor und eine Lichtquelle. Dabei sind der Lichtdetektor und die Lichtquelle derart an der Zentrifugenvorrichtung angeordnet, dass eine Detektion eines Füllmaterialparameters in einem Innenraum der Zentrifugentrommel durchgeführt werden kann. Ausserdem umfasst die Zentrifugenvorrichtung ein Softwaremodul zur Plausibilisierung des mittels des Lichtdetektors detektierten Füllmaterialparameters, wobei das Softwaremodul mittels eines Eingangs zum Empfangen eines Detektionssignals mit dem Lichtdetektor verbunden ist / werden kann. Das erfindungsgemässe Verfahren zum Betreiben der Zentrifugenvorrichtung durch Detektieren des Füllmaterialparameters des Füllmaterials innerhalb der Zentrifugentrommel umfasst dabei folgende Schritte. Beleuchten mindestens eines Teils einer Oberfläche des in der Zentrifugentrommel befindlichen Füllmaterials mit der Lichtquelle. Empfangen eines von dem Füllmaterial reflektierten Lichts mittels des Lichtdetektors und Erzeugen eines entsprechenden Detektionssignals. Das Detektionssignal des Lichtdetektors wird mittels des Softwaremoduls plausibilisiert. Das plausibilisierte Detektionssignal wird mittels des Softwaremoduls verarbeitet und es wird aus dem plausiblen (plausibilisierten) Detektionssignal mittels des Softwaremoduls mindestens ein Outputsignal generiert. Die vorrangehend beschriebenen Schritte können hierbei im Betriebszustand der Zentrifuge parallel und / oder nacheinander ausgeführt werden.

Zusätzlich zu oben genannten Schritten können auch noch verschiedene Kalibrierungsschritte (in Abhängigkeit von welche Füllmaterialparameter detektiert werden) durchgeführt werden.

Das erfindungsgemässe Verfahren wird insbesondere durch ein Programm, im speziellen ein Computerprogramm mit der Zentrifugenvorrichtung durchgeführt, wobei das Programm vorzugsweise mittels einer geeigneten elektronischen Vorrichtung durchgeführt wird. Im speziellen kann die Plausibilisierung über eine Art Blackbox-Vorrichtung durchgeführt werden.

Prinzipiell kann die erfindungsgemässe Zentrifugenvorrichtung abhängig von den Detektionssignalen über das Softwaremodul kontrolliert werden. Unter Kontrollieren einer Zentrifugenvorrichtung kann hierbei im Rahmen der vorliegenden Erfindung das Überwachen, Manipulieren sowie das Steuern/Regeln einer Zentrifugenvorrichtung verstanden werden. Insbesondere wird die Zentrifugenvorrichtung durch den Lichtdetektor überwacht und durch das Softwaremodul manipuliert, gesteuert und/oder geregelt. Das erfindungsgemässe Verfahren kann somit insbesondere ein Verfahren zum Überwachen und Kontrollieren der Trennung einer festen und einer flüssigen Phase und/oder eines Füllstandes und/oder eines Trocknungszustandes des Füllmaterials und/oder eines Reinheitsgrades eines in der Zentrifugentrommel befindlichen Produktes und/oder eines Flüssigkeitsüberstand (z.B. Voraussagen eines möglichen Starts von Schwemmen), und/oder der Trübung des Filtrats (bei Schub ist dies ein Hinweis, dass Siebe verschlissen sind und ausgewechselt werden sollten) sein.

Im Rahmen der Erfindung ist das Outputsignal insbesondere als eine Interpretation des Detektionssignals von dem Softwaremodul und somit des Füllmaterialparameters zu verstehen, wobei durch diese Interpretation über die Änderung oder Beibehaltung der Betriebsparameter entschieden werden kann.

Unter dem Lichtdetektor ist im Rahmen der Erfindung ein Detektor zu verstehen, welcher elektromagnetische Wellen detektieren kann. Unter elektromagnetischen Wellen (auch elektromagnetische Strahlung) sind unter anderem der GammaStrahlung, Röntgenstrahlung, UV-Strahlung, Infrarotstrahlung, Mikrowellenstrahlung und besonders bevorzugt sichtbares Licht zu verstehen. Somit kann der Lichtdetektor unter anderem Strahlung im Wellenlängenbereich von 400-700 nm, kleiner 5 pm, 10-380 nm (insbesondere 380-315 nm, 315-280 nm, 280-200 nm, 200-100 nm, 121-10 nm), 1 mm und 780 nm (insbesondere 0,78-1,4 µm, 1,4-3,0 µm, 3-50 µm, 50-1000 µm) und 300-1 mm.

Unter der Lichtquelle ist also eine Quelle zu verstehen, welche elektromagnetische Wellen, vorzugsweise in einem der vorrangehend genannten Wellenlängenbereich, emittiert, wobei die von der Lichtquelle emittierten elektromagnetischen Wellen mit dem Füllmaterial derart wechselwirken, dass die vom Füllmaterial reflektierte Strahlung durch den Lichtdetektor erfasst werden kann.

Die Lichtquelle kann eine Breitbandlichtquelle oder eine monochromatische Lichtquelle umfassen. Als monochromatische Lichtquelle kann hierbei z.B. ein Laser verstanden werden.

Ausserdem kann der Lichtdetektor als eine Lichtdetektoranordnung mit einer Vielzahl von Lichtdetektoren ausgestaltet sein. Durch Verwendung einer Breitbandlichtquelle und durch Anordnen eines optischen Bandpassfilters vor jedem mehreren Lichtdetektoren kann eine Spektralanalyse des vom Füllmaterial reflektierten Lichtes durchgeführt werden. Bei Verwendung einer Lichtdetektoranordnung mit mehreren Lichtdetektoren, können verschiedene Lichtdetektoren verschiedene Wellenlängen detektieren. Somit kann insbesondere jeder Lichtdetektor angepasst sein, um eine vorbestimmte Wellenlänge oder einen vorbestimmten Wellenlängenbereich innerhalb des Wellenlängenbereichs der Breitbandlichtquelle / oder mehrerer verschiedener Lichtquellen zu messen. Die Empfindlichkeit der Lichtdetektoren kann in Ausführung der Erfindung durch Anordnen eines Lichtfilters vor dem Lichtdetektor angepasst werden. Lichtfilter sind unter anderem optische Bandpassfilter, Prismas oder optische Gitter. So können die Lichtdetektoren mit einem entsprechenden Lichtfilter, auch die Lichtdetektoren grundlegend für denselben Wellenlängenbereich ausgelegt sind, nur eine vorbestimmte Wellenlänge oder einen vorbestimmten Wellenlängenbereich des gesamt möglichen Wellenlängenbereichs des Lichtdetektors detektieren, da alle anderen Wellenlängen durch den Lichtfilter herausgefiltert werden.

Lichtquellen können insbesondere auch Strahlungsquellen sein. Als Strahlungsquellen für Breitbandlicht im Wellenlängenbereich von 400-700 nm können unter anderem eine Halogenlampe (20-80 Watt, vorzugsweise 50 Watt), eine Xenon-Blitzlampe und / oder eine Leuchtdiode (LED) verwendet werden. Als monochromatische Lichtquellen können unter anderem Helium-Neon-Laser (632,8 nm), Kohlendioxidlaser (10,6 µm), Excimerlaser, Nd-YAG-Laser, Laserdiode, Titan-Saphir-Laser, Farbzentrenlaser und Freie-Elektronen-Laser (für gerichtete Strahlung im Mikrowellenbereich bis in den Röntgenbereich). Als Strahlungsquelle für Mikrowellen können unter anderem Laufzeitröhren, wie Klystrons, Wanderfeldröhren, Magnetrons, Gunndioden für Festfrequenzen und Backward-wave Oszillatoren verwendet werden. Als Strahlungsquelle für UV-Strahlung können Quecksilberdampflampen, Quarzlampen, Schwarzlichtlampen, Ultraviolettlaser (Excimer), UV-Leuchtdioden und UV-Kaltkathodenröhren verwendet werden. Als Strahlungsquelle für Infrarot-Strahlung können thermische Strahler wie Glühlampen, Heizstrahler, Halogenstrahler, Quarzstrahler und Infrarotlampen verwendet werden. Als Strahlungsquellen für Röntgenstrahlung können Röntgenröhren verwendet werden. Als Strahlungsquellen für Gammastrahlung können unter anderem ⁶⁰Co, ⁷⁵Se, ¹⁶⁹Yb, ⁹⁹Tc, ¹²³I, ¹³¹I, ¹³³Xe, ¹¹¹In und ¹⁹²Ir verwendet werden.

Der Lichtdetektor und die Lichtquelle können entweder innerhalb oder außerhalb der Zentrifugentrommel positioniert sein. Bevorzugt sind der Lichtdetektor und die Lichtquelle an einem Flansch der Zentrifugenvorrichtung, insbesondere an einem Schauglas zur Beobachtung des Zentrifigeninnenraums angebracht. Die Zentrifugenvorrichtung kann im Prinzip eine beliebige Art von Zentrifuge umfassen, einschließlich einer Chargenzentrifuge und einer kontinuierlichen Zentrifuge.

Der Lichtdetektor und die Lichtquelle können in Ausführung der Erfindung getrennt oder aneinander angeordnet sein. Prinzipiell kann die Lichtquelle auch in den Lichtdetektor integriert sein. Es soll nur gewährleistet sein, dass das vom Füllmaterial reflektierte Licht zumindest teilweise vom Lichtdetektor detektiert werden kann.

Als Lichtdetektor für sichtbares Licht kann unter anderem eine Kamera (z.B. CantyVision Prozesskamera) verwendet werden. Zur Detektion von UV-Strahlung, Röntgen-, Mikrowellen- und Infrarotstrahlung sind selbstverständlich entsprechende UV-, Röntgen, Mikrowellen- und Infrarotkameras als Lichtdetektoren geeignet. Diese Kameras beruhen auf Bildwandlung der entsprechenden Strahlung in sichtbares Licht. Hierbei kann das umgewandelte Signal des sichtbaren Lichtes als Detektionssignal zur Plausibilisierung verwendet werden. Der Begriff Kamera ist gemäss der vorrangehenden Ausführung entsprechend breit zu interpretieren. Prinzipiell ist eine Kamera gemäss Gegenstand der vorliegenden Anmeldung ein Lichtdetektor, welcher elektromagnetische Strahlung irgendeiner Wellenlänge beziehungsweise eines Wellenlängenbereichs in ein Bild umwandeln kann. Auch andere gängige im Stand der Technik bekannte Detektoren könnten selbstverständlich als Lichtdetektoren verwendet werden.

In Ausführung der Erfindung kann der Lichtdetektor mit der Lichtquelle auch eine Radarvorrichtung sein. Hierbei ist der Lichtdetektor ein Radardetektor wie z.B. Zirkulatoren, Richtkopplern und Nulloden mit Halbleitern und die Lichtquelle ein Radarsender (wie z.B. PAT (Power-Amplifier-Transmitter; Klystron, Kreuzfeldverstärker, Halbleiter,...) oder POT (Power-Oszillator-Transmitter; Magnetron, Diode,...)). Vorzugsweise kann ein 80GHz Radar (wie z.B. Vegapuls) verwendet werden, wobei ein stark fokussierter Strahl verwendet wird. Mit einer entsprechenden Radarvorrichtung kann das erfindungsgemässe Verfahren unabhängig von Schaum / Dichte, Temperatur, Leitfähigkeit, Feuchtigkeit und Staubentwicklung und auch anderen Störfaktoren durchgeführt werden. Insbesondere werden durch die Radarvorrichtung reflektierende Oberflächen erfasst, wobei das Verfahren abhängig von der Dielektrizitätskonstante des Produkts durchgeführt werden kann. Mit der Radarvorrichtung können unter anderem Entfernung, Richtung, Oberfläche, Kurs und Geschwindigkeit, insbesondere der Füllstand gemessen werden. Als Detektionssignal kann unter andere die direkten Signale als die durch ein PPI-Sichtgerät visualisierte Darstellung verwendet werden. Bei der Verwendung der Radarvorrichtung wird vorzugsweise eine Messung der Reflektion an der Füllgutoberfläche über die Signallaufzeit durchgeführt.

Der Radarsensor kann mit hochfrequenten Radarimpulsen arbeiten, die von einer Antenne abgestrahlt und von der Oberfläche des Füllmediums, aufgrund der Änderung des Dk-Wertes (relative Dielektrizitätszahl), reflektiert werden. Die Laufzeit des reflektierten Radarimpulses ist in der Regel direkt proportional zum zurückgelegten Weg.

Ob und wie einzelne oder mehrere (verschiedene) Lichtquellen und einzelne oder mehrere (verschiedene) Lichtdetektoren verwendet werden, hängt vom Anwendungsbereich ab. Zur Erzeugung von Detektionssignalen können die Lichtquellen z.B. als Spotlights mit vorgebbarer Taktung, mit mehreren Wellenlängen beziehungsweise Wellenlängenbereichen verwendet werden. Es gibt also ein breites Spektrum von Möglichkeiten um eine Vielzahl von Detektionssignalen zu erzeugen und zu plausibilisieren. Insbesondere können zur Plausibilisierung ein erstes Detektionssignal (mehrere erste Detektionssignale) einer ersten Wellenlänge (eines ersten Wellenlängenbereiches) mit einem zweiten Detektionssignal (mehrere zweite Detektionssignale) einer zweiten Wellenlänge (eines zweiten Wellenlängenbereiches) verglichen und selektiert werden. Auch ist es möglich, dass eine Vielzahl von Detektionssignalen in einer Messperiode aufgezeichnet und diese Detektionssignale durch einen Quervergleich miteinander, plausibilisiert werden.

Im Rahmen der Erfindung ist der Quervergleich ein Nebeneinanderstellen von zwei oder mehr Detektionssignalen, um die Detektionssignale hinsichtlich eines bestimmten Kriteriums (wie z.B. Mittelwert, Differenz, zeitlicher Verlauf, usw.) zu plausibilisieren und somit zu selektieren in plausible und nicht-plausible Detektionssignale.

Das Softwaremodul der Zentrifugenvorrichtung kann insbesondere eine Zentrifugensteuereinheit und eine Verarbeitungseinheit umfassen. Die Zentrifugensteuereinheit kann zum Steuern/ Regeln und auch Kontrollieren der Zentrifugenbetriebsparameter ausgestaltet sein, um auf die von der Verarbeitungseinheit plausibilisierten Outputsignale zu reagieren. Die Verarbeitungseinheit kann zum Verarbeiten und Plausibilisieren der Detektionssignale vom Lichtdetektor ausgestaltet sein. Hierbei kann die Verarbeitungseinheit insbesondere ein CPU sein. Wird als Lichtdetektor eine Kamera verwendet, so wird das Bildsignal der Kamera vom Softwaremodul verarbeitet und plausibilisiert. Insbesondere kann hierbei die Intensität und die Farbe der Füllmaterialoberfläche und deren Änderungen, in einem vorgebbaren Bildbereich verwendet werden.

In Ausführung der Erfindung kann vorrangehend beschriebenes Outputsignal auch ein Steuersignal sein. Das Steuersignal kann hierbei zur Änderung und/oder Beibehaltung der Betriebsparameter der Zentrifugenvorrichtung ausgestaltet sein. Es wird also abhängig von den gemessenen Parametern entschieden ob eine Änderung der Betriebsparameter der Zentrifugenvorrichtung notwendig ist. Die Betriebsparameter können dann per Steuersignal / Outputsignal angepasst (gesteuert/geregelt) werden.

In Ausführung der Erfindung kann bei der Plausibilisierung des Detektionssignal oder mehrerer Detektionssignale eine Selektion des Detektionssignals / der Detektionssignale erfolgen, und bei der Selektion eine Einteilung des Detektionssignals / der Detektionssignale in plausible und nicht-plausible Detektionssignale erfolgen. Hierbei werden die plausiblen Detektionssignale zum Generieren der Outputsignale / Steuersignale verwendet. Prinzipiell kann die Kontrolle der Zentrifugenvorrichtung manuell oder automatisch durchgeführt werden. Wird die Kontrolle automatisch durchgeführt, so wird bevorzugt durch das Softwaremodul mit den Outputsignale / Steuersignale eine direkte Kontrolle der Betriebsparameter der Zentrifugenvorrichtung durchgeführt. Wird die Kontrolle manuell durchgeführt, so wird bevorzugt durch das Softwaremodul mit den Outputsignale / Steuersignale eine Alarm / Information für eine Verwender erstellt, welcher den Verwender informiert, wie und welcher Betriebsparameter der Zentrifugenvorrichtung angepasst werden muss.

Im Rahmen der Erfindung kann unter der Plausibilisierung von Signalen unter anderem die Verifizierung als auch die Selektion von Signalen hinsichtlich ihrer Plausibilität verstanden werden. Hierbei kann die Selektion von Signalen hinsichtlich ihrer Plausibilität unter anderem auf einem Toleranzbereich in welchem die Signale voneinander, von einem Mittelwert, von einem vorgebbaren Wert oder einem Sollwert abweichen können, beruhen. Signale welche als nicht plausible Signale selektier werden, werden vorzugsweise heraussortiert und nicht weiterverarbeitet, also nicht zur Generierung von Outputsignalen verwendet. Die Plausibilitätskontrolle (oft auch Plausibilitätsprüfung, Plausibilitätstest oder Plausibilisierung) ist insbesondere eine Methode, in deren Rahmen ein Wert oder allgemein ein Ergebnis daraufhin überprüft wird, ob es überhaupt plausibel, also annehmbar, einleuchtend und nachvollziehbar sein kann oder nicht. Im Rahmen der Anwendung der Plausibilisierung bei einem Verfahren zum Betreiben einer Zentrifugenvorrichtung kann durch die Plausibilisierung eine Fehlinterpretation des Softwaremoduls verhindert werden, sodass die Zentrifugenvorrichtung nicht fehlgesteuert wird. Zur Plausibilisierung kann prinzipiell eine Plausibilitätsregel aufgestellt werden, welche von den Detektionssignalen erfüllt werden muss. Plausibilitätsregeln können als Formel ausgedrückt werden und können zulässige Grenzwerte, das Verhältnis zusammengehöriger Detektionssignale zueinander oder ähnliches beschreiben. Es ist auch möglich die Detektionssignale bei der Plausibilisierung auf ihren (plausiblen) Wertebereich und ihren zeitlichen Verlauf zu überprüfen und anhand dessen zu selektieren. Die Plausibilisierung kann auch durch einen Quervergleich mit alternativen Datenquellen (z.B. Look-Up-Tabellen) und anderen Detektionssignalen erfolgen. Ausserdem kann die Plausibilisierung Deep Learning umfassen, wodurch Spritzer auf dem Detektor (z.B. auf der Kameralinse) Schaumbildung, Wellenbildung und viele weitere Störfaktoren erkannt werden können und die Signale entsprechend selektiert beziehungsweise auf die Signale entsprechend reagiert werden kann. Des Weiteren kann mit Deep Learning einfacher das ganze Kamerabild, anstatt nur einzelne Bildausschnitte oder Linien für die Plausibilisierung verwendet werden. Hierbei ist unter Deep Learning unter anderem eine Optimierungsmethode für künstliche neuronale Netze mit zahlreichen Zwischenlagen zwischen einer Eingabeschicht und einer Ausgabeschicht zu verstehen, wobei dadurch eine umfangreiche innere Struktur entsteht. Mit einer derartigen Anordnung können Erweiterungen der Lernalgorithmen für Netzstrukturen mit sehr wenigen oder keinen Zwischenlagen, ermöglicht werden, wobei die Methoden des Deep Learnings einen stabilen Lernerfolg des Systems ermöglichen.

Bei der Plausibilisierung können auch die besten Detektionssignal selektiert und endsprechen priorisiert werden.

In einem Lichtdetektor und der zugrundeliegenden Software kann es immer wieder zum Signalverlust (z.B. Füllstands- oder Intensitätsüberwachung) kommen. Damit keine Fehlinterpretation entsteht, wird erfindungsgemäss die Plausibilitätskontrolle verwendet. Beginnt das Signal zu springen oder übersteuern, ist es nicht mehr plausibel.

Wie vorrangehend bereits beschrieben kann bei der Plausibilisierung der Detektionssignale mittels des Softwaremoduls bei der Selektion ein Vergleich des Detektionssignal mit einem Sollwert erfolgen. Dieser Sollwert kann als vorgebbarer Wert im Softwaremodul vorgegeben sein. Ausserdem kann der Sollwert insbesondere als eine Art Grenzwert oder Idealwert angesehen werden.

Zur Plausibilisierung der Detektionssignale mittels des Softwaremoduls kann ausserdem bei der Selektion der Quervergleich verwendet werden. Für den Quervergleich wird hierbei mindestens ein erstes mit einem zweiten Detektionssignals verglichen, um die Detektionssignale zu plausibilisieren.

In speziellen Fällen kann die Plausibilisierung, also die Kontrolle der Plausibilität der Detektionssignale, derart durchgeführt werden, dass beispielsweise bestimmte Detektionssignale nur in bestimmten Kombinationen und Reihenfolgen auftreten dürfen. Ansonsten wird das Detektionssignal als «nicht-plausibel» selektiert. Hierbei können die Detektionssignale insbesondere auf ihren (plausiblen) Wertebereich und ihren zeitlichen Verlauf geprüft werden.

Alternativ oder zusätzlich zu den vorrangehend beschriebenen Plausibilisierungsmöglichkeiten kann der Lichtdetektor mindestens mittels eines ersten und eines zweiten Eingangs mit dem Softwaremodul verbunden sein. Zur Plausibilisierung des Detektionssignals vom Lichtdetektor mittels des Softwaremoduls wird ein drittes Detektionssignals verwendet, indem ein Quervergleich zwischen einem ersten Input des ersten Eingangs und einem zweiten Input des zweiten Eingangs des dritten Detektionssignals durchgeführt wird. Es werden also der erste und der zweite Input desselben dritten Detektionssignals verglichen, welcher über zwei verschiedene Wege (Eingänge) an das Softwaremodul weitergeleitet wurde. Über eine derartige Plausibilisierung kann zum Beispiel verhindert werden, dass fehlerhaft übertragene Detektionssignale zur Steuerung der Zentrifugenvorrichtung verwendet werden. Der erste Input des ersten Eingangs und der zweite Input des zweiten Eingangs sind also als die an das Softwaremodul übertragenen Detektionssignale zu verstehen. Der erste und zweite Eingang steht dann für den Übertragungsweg. Dabei kann der erste und/oder der zweite Eingang eine Verbindung mit Kabel (elektrischer Leiter oder Lichtwellenleiter) oder eine kabellose Verbindung (Übertragung erfolgt durch gerichtete oder ungerichtete elektromagnetische Wellen, meist Radiofrequenzbereich) sein. Unter einer kabellosen Verbindung sind unter anderem Wlan, Bluetooth und NFC zu verstehen.

Analog zur vorrangehend beschriebenen Übertragung können natürlich auch mehrerer Detektionssignale über mehrere Eingänge übertragen werden. So kann ein viertes Detektionssignal über einen vierten Eingang und ein fünftes Detektionssignal über einen fünften Eingang vom Lichtdetektor zum Softwaremodul übertragen werden.

Liegen also mehrere Eingänge vor, welche dasselbe Detektionssignal vom Lichtdetektor zum Softwaremodul weitergeben, so kann auch die korrekte Signalübertragung plausibilisiert werden, indem die übertragenen Detektionssignale miteinander verglichen werden und nur die gültigen also plausiblen Detektionssignale zu Outputsignalen verarbeitet werden.

Werden bei der Plausibilisierung mehrere Detektionssignale über den Quervergleich verglichen, können hierbei die Differenzen der verschiedenen Detektionssignale ermittelt werden, um mit diesen Differenzen ein Toleranzwert zu ermitteln, mit welchem die verschiedenen Detektionssignale plausibilisiert werden.

In der Praxis kann, der durch das reflektierte Licht detektierte Füllmaterialparameter, einer Intensität einer Oberfläche des Füllmaterials in der Zentrifuge entsprechen. Dabei kann mittels der Intensität ein Flüssigkeitsüberstand und/oder eine Trockenheit und/oder ein Reinheitsgrad des Produktes erfasst werden kann. Wurde also die Intensität der Oberfläche erfasst, kann daraus ein Feuchtigkeitsgrad (Bezug auf Flüssigkeitsüberstand und/oder Trockenheit und/oder Reinheitsgrad) des Füllmaterials in der Zentrifugentrommel bestimmt werden. Die Detektionssignale der Intensität werden plausibilisiert und die plausiblen Detektionssignale der Intensität werden zum Generieren mindestens eines Steuersignals zur Änderung der Betriebsparameter der Zentrifugenvorrichtung verwendet. Je nach Feuchtigkeitsgrad können verschiedene Änderungen der Betriebsparameter (Steuerung und Regelung der Betriebsparameter) notwendig sein. Ist der Feststoffkuchen zu feucht, kann die Rotationsgeschwindigkeit der Zentrifugentrommel erhöht werden, ist das Produkt (d.h. in der Regel das weitgehend gesäuberte Füllmaterial) in der Zentrifugentrommel zu unrein, so kann ein weiterer Waschschritt durchgeführt werden. Ausserdem kann Befüllungsdurchfluss (Durchfluss des Füllguts durch die Zentrifuge, kontinuierlich) angepasst, also z.B. verringert oder vergrössert werden. Durch die Plausibilisierung der Detektionssignale der Intensität der Oberfläche des Füllmaterials kann verhindert werden das durch «falsche / fehlerhafte» also nicht-plausible Detektionssignale zur Erzeugung von Outputsignalen verwendet werden und so die Betriebsparameter der Zentrifugenvorrichtung unnötig beziehungsweise falsch geändert werden. So kann unter anderem verhindert werden, dass Produkt durch unnötige Waschschritte verloren geht und das unreine Produkte aus der Zentrifugenvorrichtung entnommen werden. Ausserdem kann Unwucht der Zentrifugenvorrichtung durch Flüssigkeitsüberstand vermieden werden.

Die Detektionssignale können insbesondere durch das Kamerabild erfasst werden, aus welchem die Intensität als Detektionssignal gewonnen wird, sodass über die Intensitätsunterschiede im Kamerabild zwischen Flüssigkeitsüberstand und Trockenheit der Produktoberfläche unterschieden werden kann. Wenn sich beim Waschen des Produkts die Oberfläche farblich verändert, also die Intensität der Produktoberfläche, so kann insbesondere der Reinheitsgrad des Produkts erfasst werden. In Ausführung der Erfindung, kann die Reinheit des Produktes auch über einen vordefinierten Farbton bestimmt werden. Die vorrangehend beschriebenen Detektionssignale werden plausibilisiert, in Outputsignale umgewandelt, und können an eine übergeordnete Steuerung weitergegeben werden.

Zur Detektion der Intensität können im Kamerabild auch verschieden (z.B. rechteckige) Bereiche definiert werden, welche dann verarbeitet und verglichen werden.

Ist der Lichtdetektor als Kamera ausgestaltet so kann die Intensität der Füllmaterialoberfläche prinzipiell auch als Graustufenintensität detektiert werden. Je grösser dann der Kontrastunterschied in den Graustufenübergängen, umso besser kann der Füllstand erfasst werden. So kann zum Beispiel ein ansteigendes Signal der Grauintensität darauf hinweisen, dass das Füllmaterial am trocknen ist, ein sinkendes Signal kann hingegen darauf hinweisen, dass ein Flüssigkeitsüberstand vorhanden ist / zunimmt.

Mit einem erfindungsgemässem Lichtdetektor kann auch der Füllstand und somit der Füllgrad in der Zentrifugentrommel berührungslos erfasst werden. Auch die Detektionssignale werden auf ihre Plausibilität überprüft. Ein Detektionssignal ist unter anderem dann plausibel, wenn es nicht übersteuert (z.B. Signalwert 120%), nicht springt und sich innerhalb einer Messperiode im Toleranzbereich befindet.

Je nach Gestaltung des erfindungsgemässen Verfahrens kann der durch das reflektierte Licht detektierte Füllmaterialparameter auch einer Farbe einer Farbkante zwischen Füllmaterial und der Zentrifugentrommel entsprechen. Die Detektionssignale der Farbe der Farbkante zwischen Füllmaterial und der Zentrifugentrommel werden plausibilisiert und die plausiblen Detektionssignale der Farbe der Farbkante werden zum Generieren mindestens eines Steuersignals zur Änderung der Betriebsparameter der Zentrifugenvorrichtung verwendet. Hierbei kann mittels der Farbe der Farbkante ein Fülllevel des Füllmaterials in der Zentrifuge bestimmt werden. Die plausiblen Detektionssignale der Farbe der Farbkante können nach der Plausibilisierung also zum Generieren mindestens eines Steuersignals zur Änderung der Betriebsparameter der Zentrifugenvorrichtung verwendet werden. Dabei kann das Steuersignal insbesondere zur Steuerung oder Regelung einer Füllmaterialzufuhr verwendet werden.

Grundsätzlich muss es nicht nur einen einzigen Füllmaterialparameter geben, welcher detektiert wird. Vorzugsweise wird sogar mehr als ein Füllmaterialparameter detektiert, insbesondere als erster Füllmaterialparameter die Farbe der Farbkante zwischen Füllmaterial und der Zentrifugentrommel und als zweiter Füllmaterialparameter die Intensität der Oberfläche des Füllmaterials. Die Detektionssignale des erster Füllmaterialparameters und des zweiten Füllmaterialparameters werden plausibilisiert um zu verhindern, dass «falsche / fehlerhafte» also nicht-plausible Detektionssignale zur Erzeugung von Outputsignalen / Steuersignale verwendet werden. Die Detektion einer Vielzahl verschiedener Betriebsparameter erlaubt eine umfassende Steuerung vieler Betriebsparameter der Zentrifugenvorrichtung.

Die Bestimmung der Farbkante erfolgt vorzugsweise indem der Lichtdetektor entlang einer Kante zwischen Zentrifugentrommel und Oberfläche des Füllmaterials detektiert (z.B. entlang einer definierbaren Linie) die nach Übergängen in Intensität, insbesondere nach Übergängen einer GraustufenIntensität sucht und somit die Farbe der Farbkante zwischen Füllmaterial und der Zentrifugentrommel bestimmt. Hierbei kann ein Niveau (also auch die Füllhöhe) von Flüssigkeiten und Feststoffen in der Zentrifugenvorrichtung gemessen werden

Prinzipiell können bei einem erfindungsgemässen Verfahren eine Vielzahl von verschiedenen Füllmaterialparametern detektiert werden. Das ein Füllmaterialparameter detektiert wird ist jedoch nicht ausschliesslich darauf zu begrenzen, dass dieser Parameter direkt detektiert wird. Oft werden die Füllmaterialparameter indirekt und/oder über eine Hilfsgrösse detektiert. So werden sowohl die Intensität der Oberfläche des Füllmaterials als auch die Farbe der Farbkante zwischen Füllmaterial und der Zentrifugentrommel mittels elektromagnetischer Strahlung, vorzugsweise im Bereich des sichtbaren Lichtes detektiert. Hierfür wird die reflektierte Strahlung von dem Lichtdetektor detektiert, und dann interpretiert, also im Fall der Kamera zu einem Bild umgewandelt, aus welchem dann die Farbe der Farbkante und Intensität der Oberfläche bestimmt werden. Ausserdem können die gemessenen Hilfsgrössen auch über eine Look-Up-Tabelle oder eine Gleichung in die gewünschten Füllmaterialparameter überführt werden. Weitere Füllmaterialparameter welche durch einen erfindungsgemässen Lichtdetektor detektiert werden sind unter anderem auch die chemische Zusammensetzung und die Dichte des Füllmaterials. Die chemische Zusammensetzung eines Füllmaterials kann zum Beispiel auch über eine Fluoreszenzmessung (also vorzugsweise Intensität) bestimmt werden.

In dem erfindungsgemässen Verfahren kann ein Steuersignal zum Steuern oder Regeln einer Menge an Füllmaterial, die der Zentrifugenvorrichtung zugeführt wird, angewendet werden. Durch ein derartiges Steuersignal kann die genaue Menge des zuzuführenden Füllmaterials bestimmt werden oder ob überhaupt eine Zufuhr von Füllmaterial notwendig ist. Ausserdem kann die Füllgeschwindigkeit (also die Geschwindigkeit der Zufuhr des Füllmaterials) über ein entsprechendes Steuersignal bestimmt und angepasst werden. Dadurch kann ein Überfüllen und ein Unterfüllen der Zentrifugentrommel und somit auch eine Unwucht und Ineffizienz vermieden werden. Des Weiteren kann in dem erfindungsgemässen Verfahren ein Steuersignal zur Ein- oder Aus-Steuerung oder Regelung des Waschschrittes angewendet werden, um zu vermeiden, dass ein Überschuss an Waschflüssigkeit auf das Füllmaterial aufgebracht wird. In dem erfindungsgemässen Verfahren kann ausserdem ein Steuersignal zum Steuern einer Rotationsgeschwindigkeit der Zentrifugentrommel angewendet werden. Hierbei kann das Steuersignal Beschleunigung, Pausieren und / oder Verlangsamen umfassen. Das Steuersignal kann selbstverständlich auch zum Ein- und Ausfahren eines Schälarms verwendet werden. Die Steuersignale können prinzipiell im Softwaremodul gespeichert / hinterlegt sein und ausgelöst werden, wenn ein bestimmtes Steuersignal dies veranlasst. Dieses Steuersignal kann hierfür insbesondere vom CPU an die übergeordnete Steuerung weitergegeben werden. Anhand des Steuersignals (oder mehrerer verschiedener Steuersignal von verschiedenen Füllmaterialparameter) kann insbesondere entschieden werden ob und was für eine Aktion notwendig ist, um die Betriebsparameter der Zentrifugenvorrichtung zu kontrollieren.

Des Weiteren betrifft die Erfindung eine Zentrifugenvorrichtung zur Verwendung in einem erfindungsgemässen Verfahren. Die Zentrifugenvorrichtung umfasst hierbei eine Zentrifuge, in welcher eine Zentrifugentrommel rotierbar angeordnet ist. Durch Rotation der Zentrifugentrommel wird eine Trennung einer flüssigen und einer festen Phase des in der Zentrifugentrommel angeordneten Füllmaterials erreicht. Durch das erfindungsgemässe Verfahren kann diese Trennung kontrolliert werden. Ausserdem umfasst die erfindungsgemässe Zentrifugenvorrichtung einen Lichtdetektor und eine Lichtquelle. Dabei ist der Lichtdetektor und die Lichtquelle derart an der Zentrifugenvorrichtung angeordnet, dass eine Detektion eines detektierbaren Füllmaterialparameters in einem Innenraum der Zentrifugentrommel durchgeführt werden kann. Ausserdem umfasst die erfindungsgemässe Zentrifugenvorrichtung ein Softwaremodul zur Plausibilisierung des mittels des Lichtdetektors detektierbaren Füllmaterialparameters. Das Softwaremodul kann mittels eines Eingangs zum Empfangen von Detektionssignalen mit dem Lichtdetektor verbunden sein.

Als weiteren Bestandteil betrifft die Erfindung eine integrierbare Vorrichtungzur Verwendung in einem erfindungsgemässn Verfahren Die integrierbare Vorrichtung umfasst dabei einen Lichtdetektor und eine Lichtquelle, wobei der Lichtdetektor und die Lichtquelle zur Detektion eines detektierbaren Füllmaterialparameters in einem Innenraum einer Zentrifugenvorrichtung angeordnet werden können. Ausserdem umfasst die integrierbare Vorrichtung ein Softwaremodul zur Plausibilisierung eines mittels des Lichtdetektors detektierbaren Füllmaterialparameters, wobei das Softwaremodul mittels eines Eingangs zum Empfangen von Detektionssignalen mit dem Lichtdetektor verbunden ist.

Im Rahmen der Erfindung kann die Zentrifuge der Zentrifugenvorrichtung unter anderem eine Schubzentrifuge, eine Korbzentrifuge, eine Siebschneckenzentrifuge, eine Schälzentrifuge, eine Stülpzentrifuge oder eine Dekanterzentrifuge sein.

Die Erfindung wird im Folgenden anhand der schematischen Zeichnung näher erläutert. Es zeigen:
- Fig. 1: ein Ausführungsbeispiel für einen erfindungsgemässen Verfahrensablauf;
- Fig. 2: ein erstes Ausführungsbeispiel einer erfindungsgemässen Zentrifugenvorrichtung;
- Fig. 3: ein zweites Ausführungsbeispiel einer erfindungsgemässen Zentrifugenvorrichtung;
- Fig.4: ein drittes Ausführungsbeispiel einer erfindungsgemässen Zentrifugenvorrichtung mit einem Schaufenster;
- Fig. 5: ein viertes Ausführungsbeispiel einer erfindungsgemässen Zentrifugenvorrichtung.

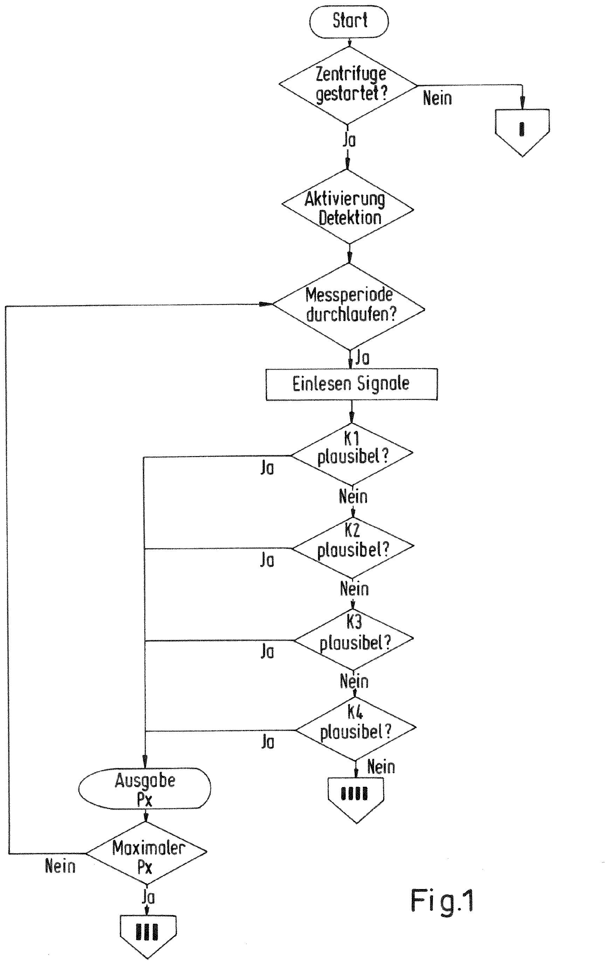

Fig. 1 zeigt ein Ausführungsbeispiel für einen erfindungsgemässen Verfahrensablauf. Es ist also ein Verfahren zum Betreiben und Kontrollieren einer Zentrifugenvorrichtung gezeigt und anhand eines Programmablaufs dargestellt. Das Verfahren zum Betreiben der Zentrifugenvorrichtung durch Detektieren des Füllmaterialparameters des Füllmaterials innerhalb der Zentrifugentrommel umfasst hierbei die folgenden Schritte.

Bei «Start» wird das Programm, welches das erfindungsgemässe Verfahren durchführt gestartet. Im Schritt «Zentrifuge gestartet?» wird geprüft ob die Zentrifugenvorrichtung angeschaltet oder in Betrieb ist. Ist die Zentrifugenvorrichtung nicht in Betrieb, folgt Schritt «I», ist sie in Betrieb folgt der Schritt «Aktivierung Detektion».

Im Schritt «I» wird entweder das Programm beendet oder die Zentrifugenvorrichtung angeschaltet / in Betrieb genommen. Im Schritt «Aktivierung Detektion» wird der Lichtdetektor und die Lichtquelle aktiviert.

Nach dem Schritt «Aktivierung Detektion» wird dann durch die Lichtquelle mindestens ein Teil der Oberfläche des Füllmaterials beleuchtet und das von dem Füllmaterial reflektierten Lichts mittels des Lichtdetektors detektiert.

Wurde eine Messperiode durchlaufen («Messperiode durchlaufen») werden die detektierten Detektionssignale über den Eingang an das Softwaremodul übertragen und die erzeugten Detektionssignale im Softwaremodul im Schritt «Einlesen Signale» eingelesen.

Die eingelesenen Detektionssignale werden in den Schritten «K1-K4 plausibel?» plausibilisiert, indem die Detektionssignale z.B. über einen Quervergleich und / oder einen Toleranzbereiches verglichen werden. Hierbei kann insbesondere ein Detektionssignale K als nicht-plausibel selektiert werden, wenn dieser eine grosse Differenz zur den anderen Detektionssignalen aufweist. Die nichtplausiblen Detektionssignale werden in einem Schritt «IIII» entweder aussortiert, korrigiert oder zur Korrektur in einer Datenbank gespeichert.

Die plausiblen Detektionssignale werden im Schritt «Ausgabe Px» in ein Outputsignal / Steuersignal umgewandelt. Im Schritt «Maximaler Px» wird anhand des Outputsignals entschieden ob eine Aktion, also eine Änderung der Betriebsparameter der Zentrifugenvorrichtung notwendig ist.

Ist eine Änderung notwendig wird im Schritt «III» mindestens ein Betriebsparameter der Zentrifugenvorrichtung angepasst und gegebenenfalls eine neue Messperiode durchlaufen. Ist keine Änderung notwendig wird nur eine neue Messperiode durchlaufen.

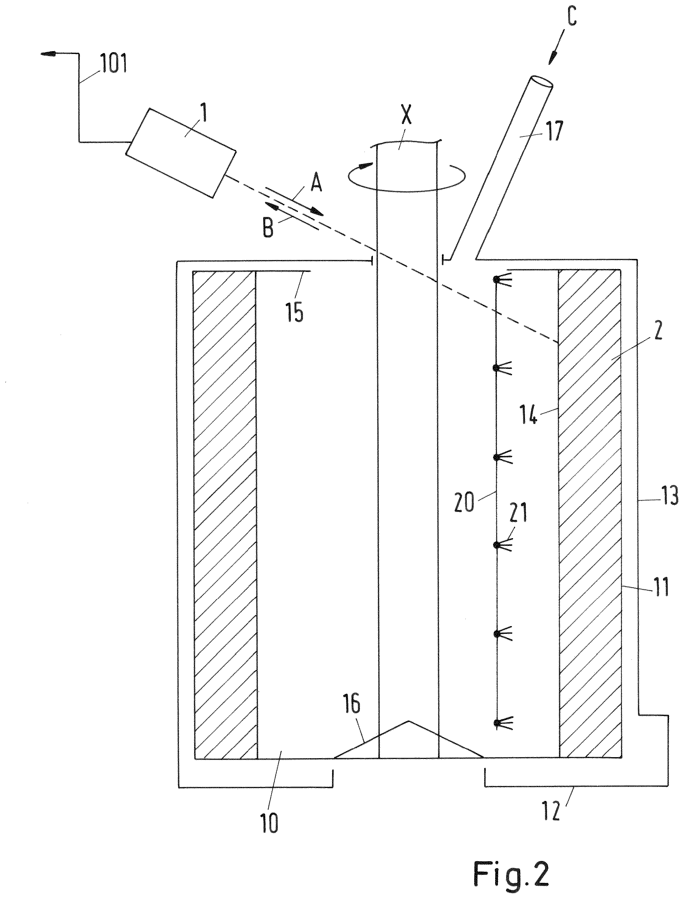

Fig. 2 zeigt ein erstes Ausführungsbeispiel einer erfindungsgemässen Zentrifugenvorrichtung. In Fig. 2 ist ein typischer Aufbau zur Verwendung in Verbindung mit dem erfindungsgemässen Verfahren dargestellt. Der in Fig. 2 gezeigte Aufbau umfasst einen um die Rotationsachse X rotierbar angeordnete Zentrifugentrommel 10 in einer Chargenzentrifuge. Selbstverständlich kann das erfindungsgemässe Verfahren in jeder beliebigen Art von Zentrifuge, insbesondere auch in kontinuierlich arbeitenden Zentrifugen durchgeführt werden. Hierfür muss die erfindungsgemässe integrierbare Vorrichtung einfach an der entsprechenden Zentrifuge montiert werden.

Die Zentrifugentrommel 10 ist derart um die Rotationsachse X angeordnet, dass die Zentrifugentrommel 10 mit einer steuerbaren Drehgeschwindigkeit rotierbar ist. Bei Drehung der Zentrifugentrommel 10 wird das Füllmaterial 2 gegen die vertikale Seitenwand 11 der Zentrifugentrommel 10 gedrückt. Da bei Rotation der Zentrifugentrommel 10 Flüssigkeiten durch die Stiftlöcher in der vertikalen Seitenwand 11 entweichen (gegebenenfalls auch eindringen) können, kann das Füllmaterial 2 in eine feste und eine flüssige Phase aufgetrennt werden. Die Flüssigkeit, die aus der Zentrifugentrommel 10 entweicht (oder eindringt), wird im äußeren Gehäuse 13 gesammelt und zum dem Auslasskanal 12 geführt, wo die Flüssigkeit aus Zentrifugenvorrichtung abgeführt werden kann. Die feste Phase kann die Zentrifugentrommel 10 über einen Auslass 16 im Boden der Zentrifugentrommel 10 verlassen.

Im Betriebszustand der Zentrifugenvorrichtung kann unter anderem die Farbe und die Intensität des Füllmaterials, sowie dessen Änderung, welches die Zentrifuge verlässt, durch den Lichtdetektor 1 mit einer Lichtquelle überwacht werden. Durch den Doppelpfeil wird angezeigt, dass Licht in einem Schritt A von der Lichtquelle auf das Füllmaterial geworfen wird. Dieses Licht wird vom Füllmaterial in einem Schritt B reflektiert und vom Lichtdetektor B detektiert. So wird über das detektiert, reflektierte Licht ein Detektionssignal erzeugt, welches nach der Plausibilisierung zur Kontrolle der Zentrifugenvorrichtung verwendet werden kann. Für die Plausibilisierung werden die Detektionssignale hierbei vom Lichtdetektor über einen Eingang 101 an das Softwaremodul weitergegeben werden. Hierbei kann die Weitergabe der Detektionssignale mittels des Eingangs 101 mit Kabel oder kabellos erfolgen.

Im vorliegenden Beispiel ist die Lichtquelle in den Lichtdetektor 1 integriert. Prinzipiell kann die Lichtquelle auch am Lichtdetektor 1 angeordnet sein oder separat vom Lichtdetektor 1 angeordnet sein. Wichtig ist nur das Licht vom Füllmaterial zum Lichtdetektor geleitet werden kann.

Während der Drehung der Zentrifugentrommel bildet das Füllmaterial 2 eine innere Oberfläche 14, auf welche das Licht von der Lichtquelle gelangt. Genau diese Oberfläche kann einerseits zur Detektion der Intensität, als auch zur Detektion der Farbe der Farbkante verwendet werden. Im Betrieb wird durch eine Kante 15 sichergestellt, dass das Füllmaterial innerhalb der Zentrifugentrommel gehalten wird.

Das Licht der Lichtquelle muss zumindest einen Teil der Oberfläche 14 treffen (beziehungsweise ihn beleuchten).

Die Zentrifugevorrichtung umfasst des Weiteren eine Zufuhr 17 über welche das Füllmaterial 2 entlang des Pfeils C in die Zentrifugentrommel 10 zugeführt werden kann.

Die Lichtquelle der integrierten Vorrichtung kann unter anderem eine Breitbandlichtquelle wie eine Halogenlampe sein, welche typischerweise Licht im Wellenlängenbereich 400-700 nm emittiert. Wie zuvor erwähnt, kann die Lichtquelle auch eine Xenon-Blitzlampe und / oder eine Leuchtdiode sein. Wie vorrangehend beschrieben können für Anwendungen in "nicht-sichtbare Bereich" auch andere Arten von Lichtquellen verwendet werden.

Prinzipiell kann der Lichtdetektor 1 auch eine Lichtdetektoranordnung 1 sein, welche eine Vielzahl von Lichtdetektoren 1 und / oder Lichtquellen umfasst. Bei einer Vielzahl von Lichtdetektoren 1 kann jeder Lichtdetektor 1 dazu ausgelegt sein, eine vorbestimmte Wellenlänge oder einen vorbestimmten Wellenlängenbereich zu erfassen.

Das reflektierte Licht von der Oberfläche 14 des Füllmaterials 2 kann auch dazu verwendet werden, um den Abstand zu dem Füllmaterial 2 und somit die Dicke des Füllmaterials zu bestimmen. D.h. der Abstand zwischen den Flächen 11 und 14. Falls der Abstand zum Füllmaterial 2 im Laufe der Zeit variiert, kann dies ebenfalls bestimmt werden. Ein Beispiel dafür kann sein, wenn in der Zentrifugentrommel das Füllmaterial herumwirbelt. Ein innerhalb der Zentrifugentrommel 10 wirbelndes Füllmaterial 2 kann zu einer Unwucht führen und die Zentrifugenvorrichtung aus dem Gleichgewicht bringen. Da das Gewicht des Füllmaterials 2 und der rotierenden Zentrifugentrommel 10 je nach Anwendung mehrere Tonnen betragen kann, sollte eine solche Unwucht vermieden werden. Durch Erfassung der Dicke des Füllmaterials 2 und dessen Änderung kann eine derartige Unwucht frühzeitig erfasst werden.

Die Dicke des Füllmaterials wird über den Abstand vom Lichtdetektor 1 und der Lichtquelle zu der Oberfläche 14 des Füllmaterials 10 bestimmt.

Eine Waschanordnung 20 zum Waschen des Füllmaterials 2 ist ebenfalls vorgesehen. Die Waschanordnung 20 weist eine Vielzahl von Düsen 21 auf, so dass eine homogene Wäsche des Füllmaterials 2 über die Oberfläche 14 ermöglicht wird. Wie oben angesprochen, überwacht der Lichtdetektor unter anderem die Farbe des Füllmaterials 14, wodurch auch der Effekt des Waschens des Füllmaterials überwacht wird und dementsprechend gesteuert werden kann. Das Waschen des Füllmaterials 2 kann insbesondere in einem Waschschritt nach Abtrennung der flüssigen Phase des Füllmaterials 2 durchgeführt werden. Wenn ein Überschuss an Waschflüssigkeit auf die Oberfläche 14 des Füllmaterials 2 aufgebracht wird, d.h. zu viel Waschflüssigkeit zugeführt wird, bildet sich auf der Oberfläche 14 eine unerwünschte Flüssigkeitsschicht. Eine derartige Flüssigkeitsschicht sollte vermieden werden, da eine solche Flüssigkeitsschicht bei der Rotation der Zentrifugentrommel 10 Wellen auf der Oberfläche des Füllmaterials 2 erzeugen kann, wodurch eine Unwucht bei der Rotation erzeugt wird. Durch den Lichtdetektor kann eine derartige Flüssigkeitsschicht auf der Oberfläche 104 des Füllmaterials 2 detektiert werden und dann die Zufuhr von Waschflüssigkeit geregelt oder gestoppt wird.

Somit kann durch einen erfindungsgemässen Lichtdetektor der Waschprozess automatisch (oder alternativ manuell) gesteuert werden. Durch die Plausibilisierung der Detektionssignale wird hierbei gewährleistet, dass es nicht zu einer Fehlsteuerung der Zentrifugenvorrichtung kommt. Durch Fehlsignale kann es bei der Steuerung der Zentrifugenvorrichtung zu Störungen kommen. Störungen heisst insbesondere in einem Waschschritt, dass trotz Flüssigkeitsschicht weiter Waschflüssigkeit zugeführt wird oder zu wenig Waschflüssigkeit zugeführt wird. Derartige Störungen können jedoch durch die Plausibilisierung der Detektionssignale vermieden werden.

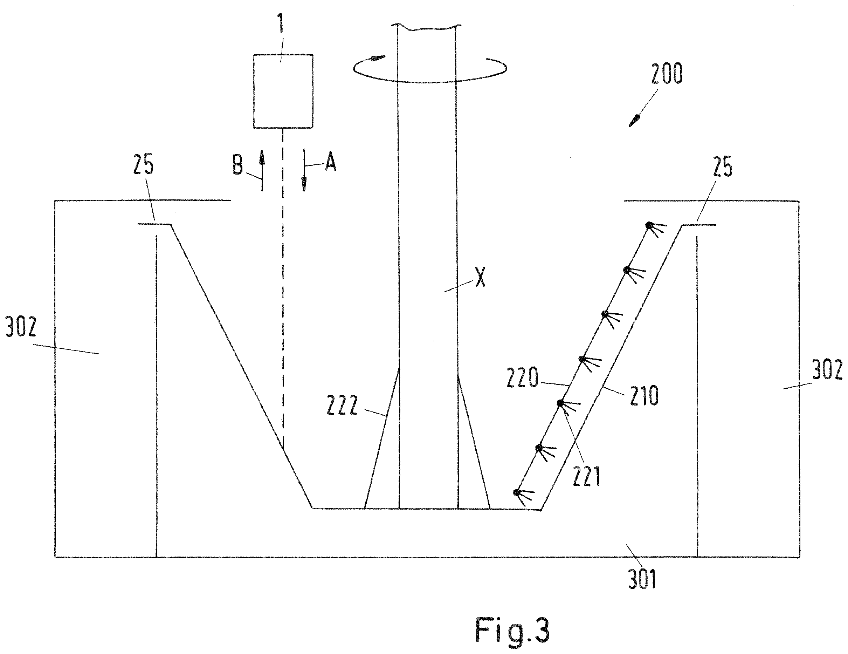

Fig. 3 zeigt ein zweites Ausführungsbeispiel einer erfindungsgemässen Zentrifugenvorrichtung. Hierbei behandelt dieses Ausführungsbeispiel eine kontinuierliche arbeitende Zentrifuge 200 mit einer Zentrifugentrommel 210, welche die Form eines Kegelstumpfs 222 besitzt. Wie in Fig. 3 dargestellt, ist der Kegelstumpf 222 nach oben gerichtet, so dass der größte Durchmesser nach oben zeigt. Bei Rotation des Zentrifugalkorbs um die Rotationsachse X verlässt die abgetrennte Flüssigkeit die Zentrifugentrommel 210 durch dessen perforierte Seitenwände, während die feste Phase die Zentrifugentrommel 210 an den oberen Kanten 25 des Kegelstumpfes verlässt. Die flüssige Phase und die feste Phase werden daher voneinander abgetrennt und in getrennten Reservoirs gesammelt. Hierbei kann die flüssige Phase in einem ersten Reservoir 201 gesammelt werden, während die feste Phase in einem zweiten Reservoir 302 gesammelt wird.

Im Ausführungsbeispiel der Figur 3 ist ebenfalls eine Waschanordnung 220 zum Waschen des Füllmaterials vorgesehen. Die Waschanordnung 220 weist eine Vielzahl von Düsen 221 auf, so dass eine homogene Wäsche des Füllmaterials durchgeführt werden kann. In der Zentrifugenvorrichtung der Figur 3 ist auch ein Kegel 222 vorgesehen, um das Füllmaterial vor zu beschleunigen, bevor es auf die rotierende Zentrifugentrommel 210 auftrifft.

Der Lichtdetektor 1 mit Lichtquelle kann entweder innerhalb oder außerhalb der Zentrifugentrommel 210 angeordnet sein, um Detektionssignale an einem vorgebbaren Punkt der Oberfläche des Füllmaterials innerhalb der Zentrifugentrommel 210 zu überwachen. In Fig. 3 ist der Lichtdetektor 1 ausserhalbder Zentrifugentrommel 210 positioniert. Ähnlich wie bei der Anordnung in Fig. 2 wird sowohl Licht emittiert (Pfeil A) als auch das reflektierte Licht detektiert (Pfeil B). Durch Überwachen der Farbe der Farbkante zwischen Zentrifugentrommel 210 und Füllmaterial und der Intensität der Oberfläche des Füllmaterials an einem vorgebbaren Teil der Oberfläche des Füllmaterials (beziehungsweise der Zentrifugentrommel) kann die Trennung des Füllmaterials überwacht und kontrolliert werden, indem die Betriebsparameter durch die aus den plausibilisierten Detektionssignalen erzeugten Steuersignale kontrolliert werden.

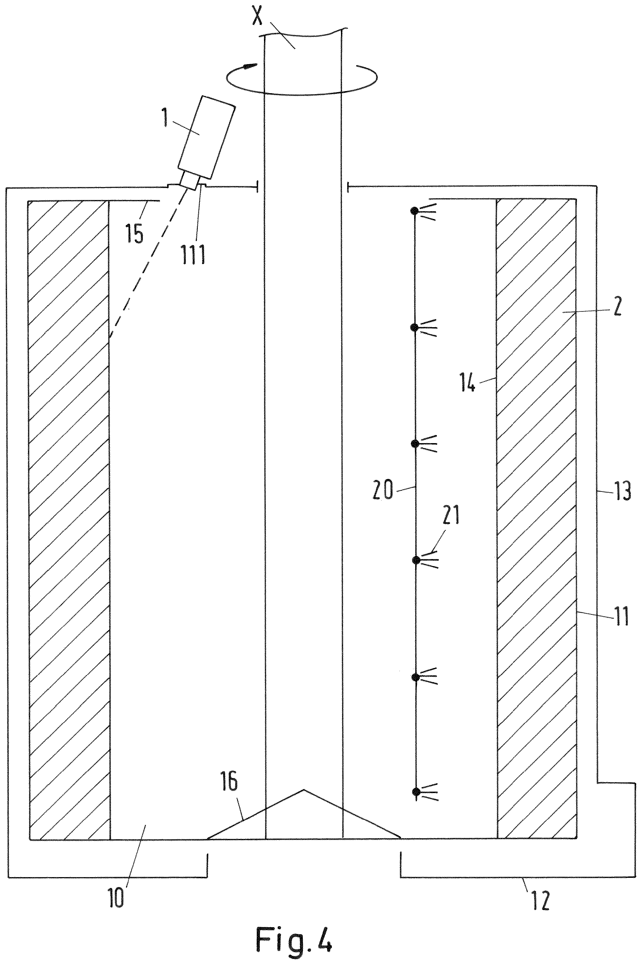

Fig. 4 zeigt ein drittes Ausführungsbeispiel einer erfindungsgemässen Zentrifugenvorrichtung. Der Aufbau der in Fig. 4 gezeigte Zentrifugenvorrichtung ist dabei weitestgehend analog mit dem Aufbau der Zentrifugenvorrichtung in Fig. 2. Die Zentrifugenvorrichtung umfasst somit eine Zentrifugentrommel 10 mit vertikalen Seitenwand 11. Wobei das Füllmaterial 2 durch Rotation der Zentrifugentrommel 10 um die Rotationsachse X in eine flüssige Phase und eine feste Phase aufgetrennt wird. Hierbei wird die flüssige Phase über die Seitenwände 11 in das äussere Gehäuse 13 abgetrennt und durch den Auslasskanal 12 abgeführt.

Auch umfasst die Zentrifugenvorrichtung der Fig. 4 die Waschanordnung 20 mir einer Vielzahl von Düsen 21, über welche eine Waschflüssigkeit auf das Füllmaterial aufgebracht werden kann.

Die Zentrifugenvorrichtung gemäss Fig. 4 unterscheidet sich von der Zentrifugenvorrichtung in Fig. 2 dahingehend, dass der Lichtdetektor 1 mit der Lichtquelle an einem Schaufenster 11 aussen an der Zentrifugenvorrichtung angebracht ist und die Detektion der Füllmaterialparameter durch dieses Schaufenster 111 erfolgt.

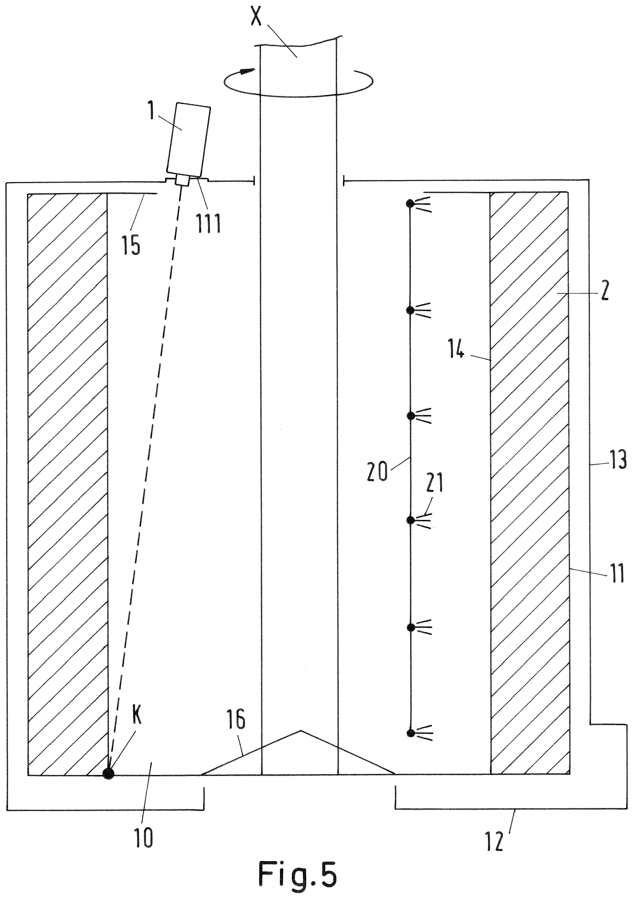

Fig. 5 zeigt ein viertes Ausführungsbeispiel einer erfindungsgemässen Zentrifugenvorrichtung, insbesondere zur Kantenerfassung für eine Lichtdetektorauswertung.

Der Aufbau der in Fig. 5 gezeigte Zentrifugenvorrichtung ist dabei weitestgehend analog mit dem Aufbau der Zentrifugenvorrichtung in Fig. 2 und Fig. 4. Die gezeigte Zentrifugenvorrichtung umfasst somit eine Zentrifugentrommel 10 mit vertikalen Seitenwand 11. Wobei das Füllmaterial 2 durch Rotation der Zentrifugentrommel 10 um die Rotationsachse X in eine flüssige Phase und eine feste Phase aufgetrennt wird. Hierbei wird die flüssige Phase über die Seitenwände 11 in das äussere Gehäuse 13 abgetrennt und durch den Auslasskanal 12 abgeführt.

Auch umfasst die Zentrifugenvorrichtng der Fig. 4 die Waschanordnung 20 mit einer Vielzahl von Düsen 21, über welche eine Waschflüssigkeit auf das Füllmaterial 2 aufgebracht werden kann.

Die Zentrifugenvorrichtung gemäss Fig. 5 unterscheidet sich von der Zentrifugenvorrichtung in Fig. 4 dahingehend, dass der Lichtdetektor 1 eine Kante K zwischen Zentrifugentrommel 10 und Oberfläche des Füllmaterials 2 erfasst.

Hierbei kann Niveau (also auch die Füllhöhe) von Flüssigkeiten und Feststoffen gemessen werden. Dabei detektiert der Lichtdetektor 1 entlang der Kante K zwischen Zentrifugentrommel 10 und Oberfläche des Füllmaterials 2 (z.B. entlang einer definierbaren Linie) die nach Übergängen in Intensität, insbesondere nach Übergängen einer Graustufen-Intensität sucht und diese erfasst. Prinzipiell gilt, je grösser der Kontrastunterschied in dem Graustufenübergängen ist, umso besser kann die Kante K des Füllstands erfasst werden.

Sollte im Betriebszustand der Zentrifugenvorrichtung ein Flüssigüberstand auftreten, bildet sich ein Intensitätsübergang (Intensitätskante) zwischen Füllmaterial 2 und Zentrifugentrommel 10, und eventuell auch mitten im Füllmaterial 2. Diese Intensitätskante kann entlang der Kante K erfasst werden.

Die Intensität kann aber vorzugsweise auch (mitten) auf dem Kuchen, also dem Produktkuchen, gemessen werden. Wie vorrangehend beschrieben eignet sich die Intensitätsbestimmung des Feststoffkuchen / Produktes unter anderem auch zur Bestimmung der Trockenheit und/oder des Reinheitsgrad des Produktes.

Die Kantenmessung (zwischen Füllmaterial und Zentrifugentrommel) wird vorzugsweise dazu verwendet werden den Füllstand zu bestimmen. Wie die Kantenmessung jedoch angewandt wird, hängt in Ausführung der Erfindung davon ab, ob die Kante eine Flüssig-oder Feststoffkante ist.

## Patentansprüche

1. Verfahren zum Betreiben einer Zentrifugenvorrichtung, wobei die Zentrifugenvorrichtung umfasst:
- eine Zentrifuge in welcher eine Zentrifugentrommel (10, 210) rotierbar angeordnet ist;
- ein Lichtdetektor (1) und eine Lichtquelle, der Lichtdetektor (1) und die Lichtquelle derart an der Zentrifugenvorrichtung angeordnet, dass eine Detektion eines Füllmaterialparameters in einem Innenraum der Zentrifugentrommel (10, 210) durchgeführt werden kann;
- und ein Softwaremodul zur Plausibilisierung des mittels des Lichtdetektors (1) detektierten Füllmaterialparameters, wobei das Softwaremodul mittels eines Eingangs (101) zum Empfangen eines Detektionssignals mit dem Lichtdetektor (1) verbindbar ist;
wobei das Verfahren zum Betreiben der Zentrifugenvorrichtung durch Detektieren des Füllmaterialparameters des Füllmaterials (2) innerhalb der Zentrifugentrommel (10, 210) die folgenden Schritte umfasst:
- Beleuchten mindestens eines Teils einer Oberfläche des Füllmaterials (2) mit der Lichtquelle, Empfangen eines von dem Füllmaterial (2) reflektierten Lichts mittels des Lichtdetektors (1) und Erzeugen eines entsprechenden Detektionssignals,
- Plausibilisierung des Detektionssignals des Lichtdetektor (1) mittels des Softwaremoduls,
- Verarbeiten eines plausiblen Detektionssignal mittels des Softwaremoduls und - Generieren mindestens eines Outputsignals aus dem plausiblen Detektionssignal mittels des Softwaremoduls.

2. Verfahren nach Anspruch 1, wobei das Outputsignal ein Steuersignal zur Änderung und/oder Beibehaltung der Betriebsparameter der Zentrifugenvorrichtung ist.

3. Verfahren nach Anspruch 1 oder 2, wobei das Verfahren ein Verfahren zum Überwachen und Kontrollieren der Trennung einer festen und einer flüssigen Phase und/oder eines Füllstandes und/oder eines Trocknungszustandes des Füllmaterials (2) und/oder eines Reinheitsgrades eines Produktes in der Zentrifugentrommel (10, 210) ist.

4. Verfahren nach einem der vorrangehenden Ansprüche, wobei bei der Plausibilisierung des Detektionssignal oder mehrerer Detektionssignal eine Selektion der Detektionssignal erfolgt, und bei der Selektion eine Einteilung der Detektionssignal in plausible und nicht-plausible Detektionssignal erfolgt, wobei die plausiblen Detektionssignale zum Generieren der Steuersignale verwendet werden.

5. Verfahren nach Anspruch 4, wobei zur Plausibilisierung der Detektionssignale mittels des Softwaremoduls bei der Selektion ein Vergleich des Detektionssignal mit einem im Softwaremodul vorgebbaren Sollwert erfolgt.

6. Verfahren nach Anspruch 4, wobei zur Plausibilisierung der Detektionssignale mittels des Softwaremoduls bei der Selektion ein Quervergleich mindestens zwischen einem ersten mit einem zweiten Detektionssignals verwendet wird.

7. Verfahren nach einem der Ansprüche 1 bis 4, wobei der Lichtdetektor mindestens mittels eines ersten und eines zweiten Eingangs mit dem Softwaremodul verbunden ist und zur Plausibilisierung des Detektionssignals vom Lichtdetektor mittels des Softwaremoduls, ein drittes Detektionssignals verwendet wird, indem ein Quervergleich zwischen einem ersten Input des ersten Eingangs und einem zweiten Input des zweiten Eingangs des dritten Detektionssignals durchgeführt wird.

8. Verfahren nach einem der vorrangehenden Ansprüche, wobei der Lichtdetektor (1) mit einer Lichtquelle als Kamera mit einer Lichtquelle ausgestaltet ist.

9. Verfahren nach einem der vorrangehenden Ansprüche, wobei der durch das reflektierte Licht detektierte Füllmaterialparameter einer Intensität einer Oberfläche des Füllmaterials (2) in der Zentrifuge entspricht, wobei mittels der Intensität ein Flüssigkeitsüberstand und/oder eine Trockenheit und/oder ein Reinheitsgrad des Produktes erfasst werden kann und die plausiblen Detektionssignale der Intensität zum Generieren mindestens eines Steuersignals zur Änderung der Betriebsparameter der Zentrifugenvorrichtung, insbesondere zur Steuerung oder Regelung eines Waschschrittes verwendet werden.

10. Verfahren nach einem der Ansprüche 1 bis 8, wobei der durch das reflektierte Licht detektierte Füllmaterialparameter einer Farbe einer Farbkante zwischen Füllmaterial und Zentrifugentrommel entspricht, wobei mittels der Farbe der Farbkante ein Fülllevel des Füllmaterials in der Zentrifuge bestimmt werden kann und die plausiblen Detektionssignale der Farbe der Farbkante nach der Plausibilisierung zum Generieren mindestens eines Steuersignals zur Änderung der Betriebsparameter der Zentrifugenvorrichtung, insbesondere zur Steuerung oder Regelung einer Füllmaterialzufuhr verwendet werden.

11. Verfahren nach Anspruch 10, wobei mindestens ein Steuersignal zum Steuern oder Regeln einer Menge an Füllmaterial (2), die der Zentrifugenvorrichtung zugeführt wird, angewendet wird, um ein Überfüllen der Zentrifugentrommel (10, 210) zu vermeiden.

12. Verfahren nach Anspruch 9 wobei das mindestens eine Steuersignal zur Ein- oder Aus-Steuerung oder Regelung des Waschschrittes angewendet wird, um zu vermeiden, dass ein Überschuss an Waschflüssigkeit auf das Füllmaterial (2) aufgebracht wird.

13. Verfahren nach einem der vorrangehenden Ansprüche, wobei mindestens ein Steuersignal zum Steuern einer Rotationsgeschwindigkeit der Zentrifugentrommel (10, 210), einschließlich Beschleunigung, Pausieren und / oder Verlangsamen, angewendet wird.

14. Verfahren nach einem der vorrangehenden Ansprüche, wobei die Plausibilisierung Deep Learning umfasst.

15. Zentrifugenvorrichtung zur Verwendung in einem Verfahren nach einem der Ansprüche 1 bis 14, die Zentrifugenvorrichtung umfassend:
- eine Zentrifuge in welcher eine Zentrifugentrommel (10, 210) rotierbar angeordnet ist;
- ein Lichtdetektor (1) und eine Lichtquelle, der Lichtdetektor (1) und die Lichtquelle derart an der Zentrifugenvorrichtung angeordnet, dass eine Detektion eines detektierbaren Füllmaterialparameters in einem Innenraum der Zentrifugentrommel (10, 210) durchgeführt werden kann; **gekennzeichnet durch**
- ein Softwaremodul zur Plausibilisierung eines mittels des Lichtdetektors (1) detektierbaren Füllmaterialparameters, wobei das Softwaremodul mittels eines Eingangs (101) zum Empfangen von Detektionssignalen mit dem Lichtdetektor (1) verbunden ist.

16. Integrierbare Vorrichtung für Zentrifugenvorrichtung nach Anspruch 15, zur Verwendung in einem Verfahren nach einem der Ansprüche 1 bis 14, die integrierbare Vorrichtung umfassend:
- ein Lichtdetektor (1) und eine Lichtquelle, der Lichtdetektor und die Lichtquelle zur Detektion eines detektierbaren Füllmaterialparameters in einem Innenraum einer Zentrifugenvorrichtung; **gekennzeichnet durch**
- ein Softwaremodul zur Plausibilisierung eines mittels des Lichtdetektors (1) detektierbaren Füllmaterialparameters, wobei das Softwaremodul mittels eines Eingangs (101) zum Empfangen von Detektionssignalen mit dem Lichtdetektor (1) verbunden ist.

## Claims

1. A method for operating a centrifuge device, the centrifuge device comprising:
- a centrifuge in which a centrifuge drum (10, 210) is rotatably arranged;
- a light detector (1) and a light source, the light detector (1) and the light source being arranged on the centrifuge device in such a way that a detection of a filling material parameter can be carried out in an interior of the centrifuge drum (10, 210);
- and a software module for plausibility check of the filling material parameter detected by means of the light detector (1), wherein the software module can be connected to the light detector (1) by means of an inlet (101) for receiving a detection signal;
wherein the method for operating the centrifuge device by detecting the filling material parameter of the filling material (2) inside the centrifuge drum (10, 210) comprises the following steps:
- illuminating at least a part of a surface of the filling material (2) with the light source, receiving a light reflected from the filling material (2) by means of the light detector (1) and generating a corresponding detection signal,
- plausibility check of the detection signal of the light detector (1) by means of the software module,
- processing a plausible detection signal by means of the software module and - generating at least one output signal from the plausible detection signal by means of the software module.

2. A method according to claim 1, wherein the output signal is a control signal for changing and/or maintaining the operating parameters of the centrifuge device.

3. A method according to claim 1 or 2, wherein the method is a method for monitoring and checking the separation of a solid and a liquid phase and/or a filling level and/or a drying state of the filling material (2) and/or a degree of purity of a product in the centrifugal drum (10, 210).

4. A method according to anyone of the preceding claims, wherein a selection of the detection signal takes place during the plausibility check of the detection signal or of several detection signals, and a division of the detection signals into plausible and non-plausible detection signals takes place during the selection, the plausible detection signals being used to generate the control signals.

5. A method according to claim 4, wherein for plausibility check of the detection signals by means of the software module, a comparison of the detection signal with a desired value which can be predetermined in the software module takes place during the selection.

6. A method according to claim 4, wherein for plausibility check of the detection signals by means of the software module, a cross-comparison is used during the selection at least between a first detection signal and a second detection signal.

7. A method according to anyone of the claims 1 to 4, wherein the light detector is connected to the software module at least by means of a first and a second inlet and for plausibility check of the detection signal from the light detector by means of the software module, a third detection signal is used by carrying out a cross-comparison between a first input of the first inlet and a second input of the second inlet of the third detection signal.

8. A method according to anyone of the preceding claims, wherein the light detector (1) is designed with a light source as a camera with a light source.

9. A method according to anyone of the preceding claims, wherein the filling material parameter detected by the reflected light corresponds to an intensity of a surface of the filling material (2) in the centrifuge, wherein a liquid supernatant and/or a dryness and/or a degree of purity of the product can be detected by means of the intensity and the plausible detection signals of the intensity are used to generate at least one control signal for changing the operating parameters of the centrifuge device, in particular for controlling or regulating a washing step.

10. A method according to anyone of the claims 1 to 8, wherein the filling material parameter detected by the reflected light corresponds to a color of a color edge between the filling material and the centrifugal drum, wherein a filling level of the filling material in the centrifuge can be determined by means of the color of the color edge and the plausible detection signals of the color of the color edge are used after the plausibility check to generate at least one control signal for changing the operating parameters of the centrifuge device, in particular for controlling or regulating a supply of filling material.

11. A method according to claim 10, wherein at least one control signal is used for controlling or regulating an amount of filling material (2) supplied to the centrifuge device in order to prevent overfilling of the centrifuge drum (10, 210).

12. A method according to claim 9, wherein the at least one control signal is used for on or off control or regulation of the washing step in order to avoid that an excess of washing liquid is applied to the filling material (2).

13. A method according to anyone of the preceding claims, wherein at least one control signal is used for controlling a rotational speed of the centrifuge drum (10, 210) including acceleration, pause and/or deceleration.

14. A method according to anyone of the preceding claims, wherein the plausibility check comprises deep learning.

15. A centrifuge device for use in a method according to anyone of the claims 1 to 14, the centrifuge device comprising:
- a centrifuge in which a centrifuge drum (10, 210) is rotatably arranged;
- a light detector (1) and a light source, the light detector (1) and the light source being arranged on the centrifuge device in such a way that a detection of a detectable filling material parameter can be carried out in an interior of the centrifuge drum (10, 210); **characterized by**
- a software module for plausibility check of a filling material parameter detectable by means of the light detector (1), wherein the software module is connected to the light detector (1) by means of an inlet (101) for receiving detection signals.

16. An integrable device for a centrifuge device according to claim 15, for use in a method according to anyone of the claims 1 to 14, the integrable device comprising:
- a light detector (1) and a light source, the light detector and the light source for detecting a detectable filling material parameter in an interior of a centrifuge device; **characterized by**
- a software module for plausibility check of a filling material parameter detectable by means of the light detector (1), wherein the software module is connected to the light detector (1) by means of an inlet (101) for receiving detection signals.

## Revendications

1. Un procédé pour faire fonctionner un dispositif de centrifugation, le dispositif de centrifugation comprenant:
- une centrifugeuse dans laquelle un tambour de centrifugeuse (10, 210) est disposé de manière rotative;
- un détecteur de lumière (1) et une source de lumière, le détecteur de lumière (1) et la source de lumière disposés sur le dispositif de centrifugation de telle sorte qu'une détection d'un paramètre de matériau de remplissage peut être effectuée dans un espace intérieur du tambour de centrifugeuse (10, 210) ;
- et un module logiciel pour la plausibilisation du paramètre de matériau de remplissage détecté au moyen du détecteur de lumière (1), dans lequel le module logiciel peut être relié au détecteur de lumière (1) au moyen d'une entrée (101) pour la réception d'un signal de détection ;
dans lequel le procédé pour faire fonctionner le dispositif de centrifugation détectant le paramètre de matériau de remplissage du matériau de remplissage (2) à l'intérieur du tambour de centrifugeuse (10, 210) comprend les étapes suivantes:
- illuminer au moins une partie d'une surface du matériau de remplissage (2) avec la source de lumière, recevoir une lumière réfléchie par le matériau de remplissage (2) au moyen du détecteur de lumière (1) et générer un signal de détection correspondant,
- plausibilisation du signal de détection du détecteur de lumière (1) au moyen du module logiciel,
- traiter un signal de détection plausible au moyen du module logiciel, et - générer au moins un signal d'output à partir du signal de détection plausible au moyen du module logiciel.

2. Un procédé selon la revendication 1, dans lequel le signal d'output est un signal de commande pour modifier et/ou maintenir les paramètres de fonctionnement du dispositif de centrifugation.

3. Un procédé selon la revendication 1 ou 2, dans lequel le procédé est un procédé pour surveiller et contrôler la séparation d'une phase solide et d'une phase liquide et/ou un niveau de remplissage et/ou un état de séchage du matériau de remplissage (2) et/ou un degré de pureté d'un produit dans le tambour de centrifugeuse (10, 210).

4. Un procédé selon l'une des revendications précédentes, dans lequel, lors de la plausibilisation du signal de détection ou de plusieurs signaux de détection, une sélection des signaux de détection est effectuée, et lors de la sélection, une répartition des signaux de détection en signaux de détection plausibles et non plausibles est effectuée, dans lequel les signaux de détection plausibles sont utilisés pour générer les signaux de commande.

5. Un procédé selon la revendication 4, dans lequel, pour la plausibilisation des signaux de détection au moyen du module logiciel lors de la sélection, une comparaison du signal de détection avec une valeur de consigne prédéterminable dans le module logiciel est effectuée.

6. Un procédé selon la revendication 4, dans lequel, pour la plausibilisation des signaux de détection au moyen du module logiciel lors de la sélection, une comparaison transversale au moins entre un premier et un deuxième signal de détection est utilisée.

7. Un procédé selon l'une des revendications 1 à 4, dans lequel le détecteur de lumière est relié au module logiciel au moins d'une première et d'une deuxième entrée et, pour la plausibilisation du signal de détection provenant du détecteur de lumière au moyen du module logiciel, un troisième signal de détection est utilisé en effectuant une comparaison transversale entre un premier input de la première entrée et un deuxième input de la deuxième entrée du troisième signal de détection.

8. Un procédé selon l'une des revendications précédentes, dans lequel le détecteur de lumière (1) est conçu comme une caméra avec une source de lumière.

9. Un procédé selon l'une des revendications précédentes, dans lequel le paramètre de matériau de remplissage détecté par la lumière réfléchie correspond à une intensité d'une surface du matériau de remplissage (2) dans la centrifugeuse, dans lequel un surplus de liquide et/ou une sécheresse et/ou un degré de pureté du produit peut être détecté au moyens de l'intensité, et les signaux de détection plausibles de l'intensité sont utilisés pour générer au moins un signal de commande pour modifier les paramètres de fonctionnement du dispositif de centrifugation, en particulier pour commander ou réguler une étape de lavage.

10. Un procédé selon l'une des revendications 1 à 8, dans lequel le paramètre de matériau de remplissage détecté par la lumière réfléchie correspond à une couleur d'un bord coloré entre le matériau de remplissage et le tambour de centrifugation, dans lequel un niveau de remplissage du matériau de remplissage dans la centrifugeuse peut être déterminé au moyen de la couleur du bord coloré, et les signaux de détection plausibles de la couleur du bord coloré sont utilisés après la plausibilisation pour générer au moins un signal de commande pour modifier les paramètres de fonctionnement du dispositif de centrifugation, en particulier pour commander ou réguler une alimentation en matériau de remplissage.

11. Un procédé selon la revendication 10, dans lequel au moins un signal de commande est utilisé pour commander ou réguler une quantité de matériau de remplissage (2) qui est alimenté dans le dispositif de centrifugation, pour éviter un remplissage excessif du tambour de centrifugation (10, 210).

12. Un procédé selon la revendication 9, dans lequel le au moins un signal de commande est utilisé pour la commande marche ou arrêt ou la régulation de l'étape de lavage, pour éviter qu'un excès de liquide de lavage ne soit appliqué sur le matériau de remplissage (2).

13. Un procédé selon l'une des revendications précédentes, dans lequel au moins un signal de commande est utilisé pour commander une vitesse de rotation du tambour de centrifugation (10, 210), y compris l'accélération, la pause et/ou le ralentissement.

14. Un procédé selon l'une des revendications précédentes, dans lequel la plausibilisation comprend l'apprentissage profond.

15. Un dispositif de centrifugation destiné à être utilisé dans un procédé selon l'une des revendications 1 à 14, le dispositif de centrifugation comprenant :
- une centrifugeuse dans laquelle un tambour de centrifugeuse (10, 210) est disposé de manière rotative;
- un détecteur de lumière (1) et une source de lumière, le détecteur de lumière (1) et la source de lumière disposés sur le dispositif de centrifugation de telle sorte qu'une détection d'un paramètre de matériau de remplissage détectable peut être effectuée dans un espace intérieur du tambour de centrifugeuse (10, 210) ; **caractérisé par**
- un module logiciel pour la plausibilisation d'un paramètre de matériau de remplissage détectable au moyen du détecteur de lumière (1), dans lequel le module logiciel est relié au détecteur de lumière (1) au moyen d'une entrée (101) pour la réception des signaux de détection.

16. Un dispositif intégrable pour le dispositif de centrifugation selon la revendication 15, destiné à être utilisé dans un procédé selon l'une des revendications 1 à 14, le dispositif intégrable comprenant :
- un détecteur de lumière (1) et une source de lumière, le détecteur de lumière (1) et la source de lumière pour la détection d'un paramètre de matériau de remplissage détectable dans un espace intérieur d'un tambour de centrifugeuse; **caractérisé par**
- un module logiciel pour la plausibilisation d'un paramètre de matériau de remplissage détectable au moyen du détecteur de lumière (1), dans lequel le module logiciel est relié au détecteur de lumière (1) au moyen d'une entrée (101) pour la réception des signaux de détection.
